Europäisches Patentamt

European Patent Office

Office européen des brevets

(19)

(11) Veröffentlichungsnummer: **0 271 723**
**B1**

(12) **EUROPÄISCHE PATENTSCHRIFT**

(45) Veröffentlichungstag der Patentschrift:
27.06.90

(51) Int. Cl.⁵: **G01V 5/00**, G01N 23/04

(21) Anmeldenummer: **87116808.4**

(22) Anmeldetag: **13.11.87**

(54) **Röntgenscanner.**

(30) Priorität: **26.11.86 DE 3640342**

(43) Veröffentlichungstag der Anmeldung:
**22.06.88 Patentblatt 88/25**

(45) Bekanntmachung des Hinweises auf die Patenterteilung:
**27.06.90 Patentblatt 90/26**

(84) Benannte Vertragsstaaten:
**DE FR GB NL**

(56) Entgegenhaltungen:
**EP-A- 247 491**
**EP-A- 0 105 618**
**EP-A- 0 123 276**
**EP-A- 0 184 247**
**DE-U- 8 133 279**
**GB-A- 2 054 319**
**GB-A- 2 083 969**
**US-A- 4 383 327**

(73) Patentinhaber: **Heimann GmbH, Weher**
**Köppel 6 Postfach 30 07, D-6200 Wiesbaden 1(DE)**

(72) Erfinder: **Geus, Georg, Dipl.-Ing., Asternweg 56,**
**D-6200 Wiesbaden(DE)**

(74) Vertreter: **Fuchs, Franz-Josef, Dr.-Ing. et al,**
**Postfach 22 13 17, D-8000 München 22(DE)**

## Beschreibung

Die Erfindung betrifft einen Röntgenscanner gemäß dem ersten Teil des Patentanspruchs.

Bei einem Röntgenscanner dieser Art werden die Gepäckstücke auf der Transportvorrichtung mit einer bestimmten Geschwindigkeit an der in einer Ebene senkrecht zur Transportrichtung angeordneten Detektorzeile vorbeibewegt und streifenweise abgetastet. Die Abtastwerte, deren Zahl von der Anzahl der Detektoren in der Detektorzeile abhängt, werden nach Digitalisierung entweder in Echtzeit ausgewertet oder zum Aufbau eines Videobildes in einen Speicher geschrieben.

Bei der Durchstrahlung der Gepäckstücke entsteht Sekundärstrahlung. Dies gilt insbesondere für wenig absorbierende Teile, z.B. Plastiksprengstoff.

Bei medizinischen Untersuchungsgeräten ist es bekannt, die Streustrahlung, die vom Untersuchungsobjekt ausgeht, zu erfassen. Bei einem Computertomographen gemäß der GB-A 2 054 319 erfolgt diese Erfassung zusätzlich zur Erfassung der Primärstrahlung, um Informationen über die Kontur des untersuchten Körpers zu erhalten. Solche Informationen sind bei einem Röntgenscanner zur Untersuchung des Inhaltes von Gepäckstücken jedoch uninteressant. Bei einem Röntgengerät gemäß der GB-A 2 983 969 erfolgt die Erfassung der Streustrahlung, um die interne Struktur des untersuchten Körpers zu bestimmen. Ein Primärstrahlenbild wird nicht erzeugt, so daß bei Anwendung des hier beschriebenen Gedankens bei einem Röntgenscanner zur Untersuchung des Inhaltes von Gepäckstücken nicht alle zu detektierenden Teile erfaßt werden, insbesondere keine Metallteile, wie Waffen.

Durch DE-U 133 279 ist es bei einem Röntgenscanner zur Untersuchung des Inhaltes von Containern bekannt, mit demselben Detektor sowohl die Primärstrahlung als auch die Streustrahlung zu erfassen. Diese Erfassung muß jedoch zeitlich aufeinanderfolgend vorgenommen werden, wenn getrennte Bilder erzeugt werden sollen, da nur ein Detektor vorhanden ist. Es ist also möglich, daß unerwünschte Teile des jeweils untersuchten Gepäckstückes übersehen werden, da sie gerade durchstrahlt werden, wenn die für ihre Detektierung nicht geeignete Strahlung vom Detektor erfaßt wird.

In der EP-A 0 247 491 (Anmeldetag 18.05.87; Priorität 28.05.86) ist ein Röntgenscanner beschrieben, bei dem um den Prüfraum Detektoren für die vom Röntgenstrahlenbündel erzeugte Streustrahlung sind.

Der Erfindung liegt die Aufgabe zugrunde, einen Röntgenscanner der eingangs genannten Art so auszubilden, daß wenig absorbierende Teile, z.B. Plastiksprengstoff, sicher erfaßt und bildlich dargestellt werden.

Diese Aufgabe ist erfindungsgemäß gelöst durch die Merkmale des zweiten Teils des Patentanspruchs.

Bei dem erfindungsgemäßen Röntgenscanner werden durch die zweite Detektorzeile Signale gewonnen, die nur der Streustrahlung entsprechen und die bildlich dargestellt werden.

Die Intensität der zu detektierenden Streustrahlung ist im Verhältnis zur Primärstrahlung um einige Größenordnungen geringer. Die Detektoren der zweiten Zeile sollten daher eine möglichst große Eintrittsfläche aufweisen. Zum Zweck der ortsrichtigen Darstellung der Detektorsignale ist es notwendig, räumlich getrennte Empfangsbereiche zu schaffen. Dabei ist die Strahlung in Richtung der Bewegung des Prüfgutes bereits strahlerseitig kollimiert und eine Festlegung des jeweiligen Empfangswinkels ist nur in einer senkrecht zur Transportrichtung liegenden Ebene erforderlich. Hierzu kann vor jedem Detektor der zweiten Zeile ein von mehreren Lamellen gebildeter Kollimator angeordnet sein, durch den der jeweilige Empfangswinkel festgelegt wird.

Die Erfindung ist nachfolgend anhand der Zeichnung näher erläutert. Es zeigen:

Fig. 1 einen Röntgenscanner nach der Erfindung, und

Fig. 2 eine Einzelheit des Röntgenscanners gemäß Fig. 1.

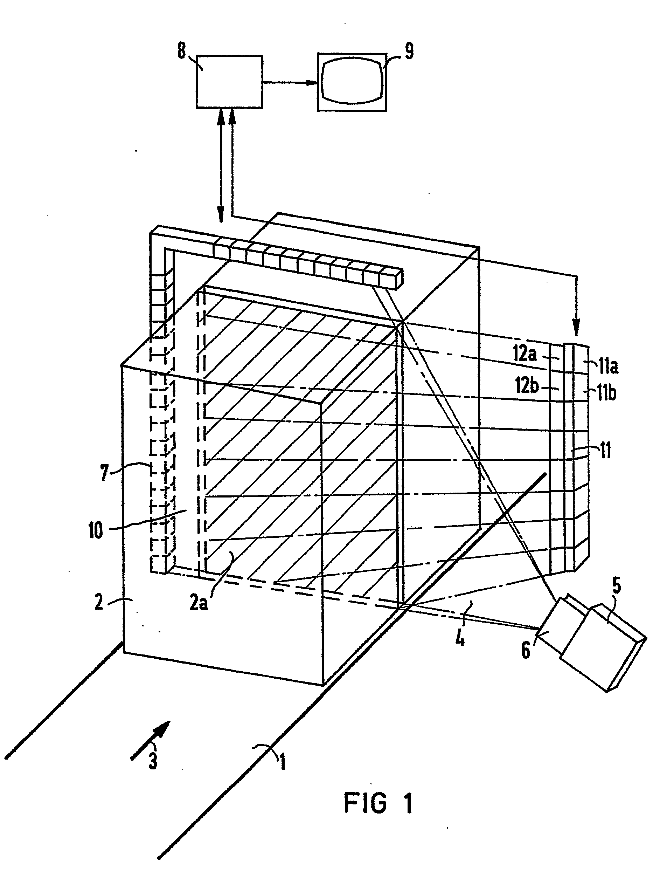

In der Fig. 1 ist ein Förderband 1 gezeigt, auf dem Prüfgut 2 in Richtung des Pfeiles 3 relativ zu einem fächerförmigen Röntgenstrahlenbündel 4 bewegt wird. Das Röntgenstrahlenbündel 4 wird durch einen Röntgenstrahler 5 erzeugt und mit Hilfe eines Kollimators 6 eingeblendet. Es trifft nach der Durchstrahlung einer Transversalschicht 2a des Prüfgutes 2 auf einer geknickten Zeile 7 aus einzelnen Detektoren auf. Die Detektorsignale werden mit Hilfe einer Bildverarbeitungselektronik 8 in Signale umgewandelt, die dem Röntgenschattenbild des beim Transport des Prüfgutes 2 durchstrahlten Bereiches entsprechen. Ein Monitor 9 dient zur bildlichen Wiedergabe des Röntgenschattenbildes.

Neben dem Prüfraum 10 ist eine zweite Zeile 11 angeordnet, die ebenfalls aus einer Reihe von Einzeldetektoren 11a, 11b usw. besteht. Vor jedem Einzeldetektor 11a, 11b usw. ist ein Kollimator 12a, 12b usw. angeordnet. Die Kollimatoren 12a, 12b usw. sind auf unterschiedliche Bereiche des Prüfraumes 10 und damit des Prüfgutes 2 ausgerichtet. Jeder Einzeldetektor 11a, 11b usw. empfängt die aus einem Bereich des Prüfraumes 10 und damit des Prüfgutes 2 kommende Streustrahlung, nicht aber die Primärstrahlung, d.h. das Strahlenbündel 4.

Die Ausgangssignale der Detektoren 11a, 11b usw. können mit Hilfe der Bildverarbeitungselektronik 8 dazu herangezogen werden, die Streustrahlungsverteilung im Prüfgut 2 auf dem Monitor 9 hervorgehoben darzustellen. Die Darstellung der Streustrahlungsverteilung kann durch eine unterschiedliche Farbe aber auch zeitlich nach der Darstellung des Primärstrahlenbildes oder durch Markierung eines Bildbereiches nach einem Berechnungsalgorithmus, der aus beiden Bildinformationen gewonnen wird, erfolgen.

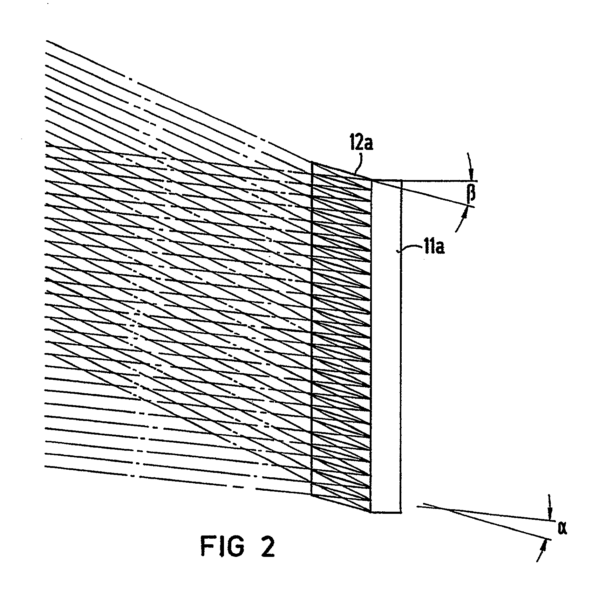

Die Fig. 2 zeigt als Beispiel den Detektor 11a und den ihm vorgeschalteten Kollimator 12a. Aus der Figur 2 geht hervor, daß der Kollimator 12a von mehreren Lamellen gebildet ist, die den jeweiligen Empfangsbereich festlegen. Die Empfangswinkel der durch die Lamellen des Kollimators 12a festgelegten Bereiche überlappen sich gemäß Fig. 2 teilweise. Für die Randstrahlen ergibt sich so maximal die Länge des Gesamtkollimators zuzüglich der Divergenz entsprechend dem Winkel β einer dieser Lamellen als Empfangsbereich.

Da die Empfangsrichtung für jeden der Detektoren 11a, 11b usw. unterschiedlich ist werden die Lamellen jedes Kollimators 12a, 12b usw. um individuell verschiedene Winkel α geneigt.

Als Streustrahlungsdetektoren 11a, 11b usw. eignen sich lichtempfindliche Halbleiter mit vorgeschaltetem Szintillator, rönt genempfindliche Halbleiter, Geiger-Müller-Zählrohre oder Photovervielfacher mit Szintillator.

## Patentansprüche

Röntgenscanner zur Untersuchung des Inhaltes von Gepäckstücken mit einem Röntgenstrahler (5) mit Kollimator (6) für ein fächerförmiges Röntgenstrahlenbündel (4) auf einer Seite und einer Zeile (7) von einzelnen Detektoren auf der anderen Seite einer Transportvorrichtung (1) für die Gepäckstücke (2), sowie mit einer Elektronik (8) zur Erfassung und Verarbeitung der Detektorsignale, dadurch gekennzeichnet, daß neben dem Prüfraum (10) eine zweite Zeile (11) von einzelnen Detektoren (11a, 11b usw.) angeordnet ist, daß vor jedem Detektor (11a, 11b usw.) der zweiten Zeile (11) ein von mehreren Lamellen gebildeter Kollimator (12a, 12b usw.) angeordnet ist und daß die Lamellen der Kollimatoren (6, 11a, 11b usw.) auf unterschiedliche Bereiche im Prüfraum (10) ausgerichtet sind, derart daß die Detektoren (11a, 11b usw.) der zweiten Zeile (11) nicht vom fächerförmigen Röntgenstrahlenbündel (4), sondern nur von der von den Gepäckstücken (2) ausgesandten Streustrahlung getroffen wird und daß Mittel (8) zur bildlichen Darstellung der Streustrahlungsverteilung vorhanden sind.

## Claims

X-ray scanner for inspecting the contents of articles of baggage, with an X-ray source (5) having a collimator (6) for a fan-shaped X-ray beam (4) on one side of a conveyor facility (1) for the articles of baggage (2), and, on the other side, an array (7) of separate detectors, and with an electronic system (8) for detection and processing of the detector signals, characterised in that adjacent to the test chamber (10) there is arranged a second array (11) of separate detectors (11a, 11b etc.), in that in front of each detector (11a, 11b etc.) of the second array (11) there is arranged a collimator (12a, 12b etc.) formed by several lamellae, and that the lamellae of the collimators (6, 11a, 11b etc.) are directed at different regions in the test chamber (10) in such a manner that the detectors (11a, 11b etc.) of the second array (11) are not struck by the fan-shaped X-ray beam (4), but only by the scattered radiation emitted from the articles of baggage (2), and in that there are means (8) for visual representation of the scattered radiation distribution.

## Revendications

Scanner X utilisable pour l'examen du contenu de bagages à l'aide d'un émetteur de rayons X (5), comportant un collimateur (6) pour un faisceau de rayons X en éventail (4), d'un côté d'un dispositif (1) de transport des bagages (2), et une rangée (7) de détecteurs individuels de l'autre côté de ce dispositif, ainsi qu'un système électronique (8) servant à recevoir et à traiter les signaux des détecteurs, caractérisé par le fait qu'une seconde rangée (11) de détecteurs individuels (11a, 11b, etc) est disposée à côté de l'espace de contrôle (10), qu'un collimateur (12a, 12b, etc) formé de plusieurs lamelles est disposé en avant de chaque détecteur (11a, 11b, etc), et que les lamelles des collimateurs (6, 11a, 11b, etc) sont orientées sur différentes zones de l'espace de contrôle (10), de telle sorte que les détecteurs (11a, 11b, etc) de la seconde rangée (11) sont atteints non pas par le faisceau de rayons X en éventail (4), mais uniquement par le rayonnement diffusé émis par les bagages (2), et qu'il est prévu des moyens (8) servant à donner une représentation, sous forme d'image, de la distribution du rayonnement diffusé.

**FIG 1**

FIG 2